(19) Europäisches Patentamt
European Patent Office
Office européen des brevets

(11) Publication number: **0 016 265**
**B1**

(12) # EUROPEAN PATENT SPECIFICATION

(45) Date of publication of patent specification: **14.09.83**

(21) Application number: **79300404.5**

(22) Date of filing: **14.03.79**

(51) Int. Cl.³: **B 65 D 23/08,**
C 03 C 17/32,
C 03 C 17/34, C 09 D 3/76

(54) **Powder composition, process for the preparation thereof, and use thereof in coating a glass container.**

(43) Date of publication of application:
**01.10.80 Bulletin 80/20**

(45) Publication of the grant of the patent:
**14.09.83 Bulletin 83/37**

(84) Designated Contracting States:
**CH DE FR GB IT SE**

(56) References cited:
**FR - A - 2 192 949**
**FR - A - 2 292 024**
**US - A - 3 823 032**

(73) Proprietor: **CELANESE CORPORATION**
**1211 Avenue Of The Americas**
**New York New York 10036 (US)**

(72) Inventor: **Hannon, Martin, J.**
**103 Pomeroy Road**
**Madison New Jersey (US)**
Inventor: **Forschirm, Alex S.**
**21 Rockaway Place**
**Parsippany New Jersey (US)**
Inventor: **Greene, Richard K.**
**30 A Broad Street**
**Summit New Jersey (US)**

(74) Representative: **De Minvielle-Devaux, Ian Benedict Peter et al,**
**CARPMAELS & RANSFORD 43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 016 265 B1**

# Powder composition, process for the preparation thereof, and use thereof in coating a glass container

This invention relates to a powder composition containing certain polymers. This powder composition has good melt flow under zero shear conditions and is useful in coating various substrates such as glass bottles especially those which are employed as pressurised containers, particularly in the carbonated beverage and beer industries. The invention also relates to the preparation of the powder composition and to the use thereof in coating a glass container.

The hazards of using glass containers, particularly glass bottles which contain beer or carbonated beverages, are well known. Breakage of such bottles often takes place due to the internal pressure exerted by the pressurised gas in the carbonated beverage or beer as well as by dropping the bottles and other impacts caused by external forces which occur not only in the course of production and distribution of the bottled product, but also as a result of handling of the bottled product by consumers. Such breakage may result in injuries to the human body.

It has been proposed to apply coatings to such bottles in order to prevent scattering of the broken glass upon breakage. In this connection, see West German Patent 2,636,157, and U.S. Patent 3,823,032. The latter patent discloses that thermoplastic elastomers such as block copolymers of styrene and butadiene are useful in coating glass bottles. Thermoplastic elastomeric compositions, having improved environmental resistance, are disclosed in U.S. Patent 3,686,365.

Environmental considerations render it especially desirable to be able to apply protective coatings to various substrates such as glass bottles in a non-polluting manner. The use of solid powder particles to coat these substrates eliminates the need for solvent and the accompanying environmental problems. In this connection, see U.S. Patent 3,737,401.

When the powder particles are deposited upon a substrate such as a glass bottle, the particles must be heated to provide a uniform molten coating on the glass bottle. The coating is then cooled to provide a uniform solid coating on the bottle.

When certain thermoplastic elastomers such as styrene/butadiene/styrene block copolymers are used as a major component of the powder particles, the melt flow of the thermoplastic elastomers is not sufficient to provide a uniform molten coating. Although it is known to use copolymers of alphamethylstyrene and styrene with certain elastomers to produce pressure sensitive adhesives and to use such additives in hot melt coatings (see U.S. Patent 3,932,332), the use of this additive does not provide sufficient flow in thermoplastic elastomers at temperatures below that at which the thermoplastic elastomer discolours.

It has been proposed to use hydrogenated aromatic hydrocarbon petroleum resins as tackifiers for polymers such as styrene/isoprene/styrene block copolymers in a hot melt adhesive. For example, United States Defensive Publication T917008 discloses a hot melt adhesive containing a tackifier which is derived from a polymerized cracked naphtha fraction and having a boiling point between −10 and 280°C. This fraction contains polymerizable unsaturated hydrocarbons, inert paraffins and alkyl benzenes.

In some instances thermoplastic elastomer powder particles tend to coalesce and become tacky, lumpy materials which are difficult to spray. Such powders tend to produce coatings which have the appearance of orange peel. This tendency of thermoplastic elastomers to stick together, coalesce, agglomerate and/or exhibit "blocking", results from an undesired adhesion between touching particles such as occurs under moderate pressure during storage of the particles. Particularly, storage under somewhat elevated temperatures, and under pressures caused by stacking bales or packages of polymer, create conditions favourable for such agglomeration. If the particles of the polymers agglomerate, then it frequently becomes necessary to grind, crush, or otherwise masticate the mass in order to reseparate the particles or to again produce a utilizable particulate material. Such mechanical treatment is burdensome and undesirable because of inconvenience, added labour and time, cost, possible contamination of the elastomer, and possibly in some instances even degradation of some of the polymeric products due to the additional working, temperature and the like.

Attempts have been made to ease this problem by applying a dusting agent such as carbon black, talc, zinc stearate, rice flour, chalk, magnesium oxide, infusorial earth, or the like, to the particles in an effort to counteract the natural tackiness or blockiness of the particulate-form polymers. All of these dusting agents, however, have some objectionable characteristics. For example, adding colour to the natural polymer may be undesirable for some purposes. The dusting agents may be objectionable for some end uses, such as in clear coatings where the presence of such agents could cause haziness. Silica powder and some grades of talc may possibly pose health hazards under some circumstances that will restrict their use. Stearate powders at levels sufficient to combat tackiness may adversely affect polymer performance properties such as tack, adhesion, optical clarity, and the like. For a more detailed discussion of the disadvantages of prior art attempts to solve this general problem, see U.S. Patents, 3,528,841 and 4,027,067 and British Patent 1,200,532.

The present invention provides a new powder composition which is useful for coating glass containers to reduce or avoid the problems outlined above, or for any other purpose in which it is

desirable to have the special characteristics of this powder composition by way of good melt flow under zero shear conditions.

The invention, as defined in the claims hereafter, is more generally described in the following passages.

In one aspect, the present invention provides a powder composition useful for coating applications comprising a melt blend mixture of

a) from 25 to 90% by weight of a block copolymer which is selectively hydrogenated to at least some degree and having at least two kinds of polymer blocks wherein one polymer block is designated by A and a second polymer block is designated by B such that prior to hydrogenation,

1. each A is a polymer end block of a monovinyl or alpha alkyl monovinyl arene having a number average molecular weight in the range of from 5,000 to 75,000, the blocks A comprising from 5 to 50% by weight of total block copolymer, and
2. each B is a polymer mid block having a number average molecular weight of from 30,000 to 300,000, and formed from a conjugated diene selected from homopolymers of at least one conjugated diene having 4 to 10 carbon atoms per molecule, the blocks B comprising from 50 to 95% by weight of the total block copolymer, and

b) from 75 to 10% by weight of at least one melt flow modifier selected from the group consisting of

1. monovinyl arene homopolymer
2. alpha alkyl monovinyl arene homopolymers, and
3. copolymers of monovinyl arenes and alpha alkyl monovinyl arenes

wherein the aromatic portions of the polymer described in b) 1., 2. and 3. are at least partially hydrogenated to remove the aromatic character thereof, wherein the powder composition possesses good melt flow characteristics under zero shear conditions.

In another aspect, the present invention provides a non-tacky powder composition useful for coating applications. This powder composition comprises from 80 to 97% by weight of tacky powder particles and, adhering to the tacky surface of these tacky particles in a non-continuous layer, from 20 to 3% by weight of smaller solid particles which are hard and non-tacky.

The tacky powder particles comprise a melt blend mixture of

(a) a block copolymer and
(b) at least one melt flow modifier as described hereinbefore, but in which the block copolymer (a) may be either unhydrogenated or selectively hydrogenated to at least some degree.

The smaller solid particles are hard and non-tacky and comprise at least one melt flow modifier described above with the provision that such a melt flow modifier have a glass transition temperature of at least 20°C.

In yet another aspect, the present invention provides a process for preparing the non-tacky powder composition. This process comprises

(A) melt blending a first composition comprising
  (1) the block copolymer, and
  (2) at least one of the melt flow modifiers,
(B) cooling the first molten composition to form a solid composition,
(C) pelletizing the solid composition,
(D) dry blending the pelletized composition with the hard, non-tacky solid and
(E) comminuting the dry blend at a temperature below the embrittlement temperature of the B block portion of the thermoplastic elastomer to form hard, non-tacky powder particles.

In still another aspect, the present invention provides a process for coating a glass container and the coated glass container obtained by the process. This process comprises

A. preheating a glass container,
B. applying on the external wall surface of the container the powder composition described above,
C. baking the coated container until the powder particles become molten and form a smooth, molten coating on the glass surface,
D. applying to the coated container a synthetic resin selected from the group consisting of epoxy resins, polyurethanes, polycarbonates, polyesters, polystyrenes, ethylene/vinyl acetate copolymers and acrylic homopolymers and copolymers wherein the synthetic resin is applied to substantially the entire surface of the first coating and also to a part of the glass bottle surface,
E. baking the coated container until the synthetic resin forms a smooth coating, and
F. cooling the coated bottle to substantially ambient temperature.

Thermoplastic elastomers are polymeric materials that behave in some ways like thermoplastics and in other ways like elastomers. They behave like thermoplastics in that above their softening point they may be processed using ordinary plastics processing equipment. For example, they may be formed by thermoplastic injection molding, extrusion, blow molding, or vacuum forming. On the other hand, when utilized below their softening point, they behave like elastomers, i.e. they exhibit the properties normally associated with vulcanized rubbers without having been subjected to vulcanization. Thus, such polymers have the elastic and resilient properties of rubber but may be processed and reprocessed like ordinary thermoplastics.

The thermoplastic copolymers useful in the present invention are block copolymers having at least two kinds of polymer blocks. Copolymers useful in the present invention are described in "Applied Polymer Science", Chapter 29, p. 394ff, of *Organic Coatings and Plastics Chemistry* (Craver & Tess, 1975) which is hereby incorporated by reference.

Preferred block copolymers for use in the present invention are radial or branched block copolymers. By "radial" or "branched" copolymers is meant copolymers having the general configuration

$$Z—(BA)n$$

wherein each A group is a terminal block segment comprising a polymer made from a monovinyl or alpha alkyl monovinyl arene and each B is a block segment comprising a polymer made from a conjugated diene, Z is derived from a polyfunctional compound having at least three reactive sites, and n is not less than 3. The radical block copolymer, as herein defined, must have at least three block copolymer branches radiating from a nucleus Z.

The "Z" group which forms the nucleus from which the polymer blocks of the radical block copolymer radiate is derived from a polyfunctional compound having at least three reactive sites capable of reacting with a carbon-lithium bond. Types of polyfunctional compounds which can be used include the polyepoxides, polyisocyanates, polyimines, polyaldehydes, polyketones, polyanhydrides, polyesters, polyhalides and the like. A preferred polyfunctional compound is a silica containing compound.

The preparation of the preferred radial block copolymers of this invention may be any technique known to those skilled in this art, such as those described in U.S. Patents 3,932,327; 3,692,874 and 3,281,383, the disclosures of which are all hereby incorporated by reference.

These radial block copolymers are available commercially as Solprene thermoplastic elastomers.

An important subgroup of these block copolymers comprises those thermoplastic elastomers in which the olefinic double bonds in the diene polymer blocks are converted to saturated hydrocarbon units by selective hydrogenation of the preformed block copolymer. The object of the hydrogenation is to improve the environmental resistance of the olefinically unsaturated block copolymer, particularly its resistance to light, oxygen, ozone, and heat. The thermoplastic elastomeric block copolymers useful in the present invention are at least partially selectively hydrogenated as described in U.S. Patent 3,810,957, which is hereby incorporated by reference.

The thermoplastic elastomers useful in the present invention comprise from 5 to 50, and preferably from 15 to 35% by weight monovinyl or alpha alkyl monovinyl arenes and from 50 to 95, and preferably from 65 to 85% by weight conjugated diene which is either substantially unhydrogenated or at least partially hydrogenated.

The monovinyl arene or alpha alkyl monovinyl arene useful as the aromatic block of the thermoplastic elastomer includes styrenes, alpha alkyl styrenes, ring alkylated styrenes, such as vinyl toluene and t-butyl styrene, alpha, alpha dialkyl styrene, ring halogenated styrenes such as the chlorostyrenes, vinyl naphthalenes and the like or mixtures thereof. Styrene and alpha methyl styrene are preferred.

The conjugated dienes useful in preparing the thermoplastic elastomer include butadiene, alkyl substituted butadienes such as isoprene, 2,3-dimethyl butadiene, ethyl butadiene, methyl pentadiene, (piperylene) and the like, or mixtures thereof. The alpha, gamma conjugated butadienes are preferred. Unsubstituted alpha, gamma butadiene is particularly preferred.

A typical, but by no means exhaustive, list of suitable block polymers includes the following:

Polystyrene-polybutadiene-polystyrene,
Polystyrene-polyisoprene-polystyrene,
Polystyrene-poly(random butadiene-styrene)-polystyrene,
Poly(alpha-methylstyrene)-polybutadiene-poly(alpha-methylstyrene),
Poly(alpha-methylstyrene)-polyisoprene-poly(alpha-methylstyrene), and
Poly(styrene-alpha-methylstyrene)-poly(butadiene-isoprene) (styrene-alpha-methylstyrene).

The number average molecular weight of the thermoplastic elastomers useful in the present invention may be generally from 15,000 to 150,000, and preferably from 50,000 to 80,000.

The conjugated diene portion of the thermoplastic elastomer may be hydrogenated to any degree including substantially complete saturation whereas the aromatic portion is left substantially unhydrogenated, e.g., less than 5%, preferably less than 2% hydrogenated. The conjugated diene

portions of the thermoplastic elastomers useful in the present invention are hydrogenated to generally at least 10%, typically at least 50%, and preferably at least 98%. Substantially complete hydrogenation of the conjugated diene portion is preferred.

Thermoplastic elastomers which are at least partially hydrogenated are preferred for use in the present invention since these polymers have improved ultra violet light exposure stability, improved outdoor weatherability, and improved thermal stability. Also, unexpectedly, those polymers which are at least partially hydrogenated do not "blush" or absorb water when in contact with a caustic solution to the same extent as do those polymers which are not at least partially hydrogenated. By "blush" is meant that the coating acquires some degree of opaqueness when in contact with an aqueous solution.

The melt flow modifier useful in the present invention may be selected from the group consisting of monovinyl arene hompolymers, alpha alkyl monovinyl arene homopolymers, and copolymers of monovinyl arenes and alpha alkyl monovinyl arenes either with each other or with other comonomers. The modifiers must be at least partially hydrogenated. Copolymers of monovinyl arenes and alpha alkyl monovinyl arenes either with each other or with other comonomers are preferred. Copolymers of these compounds with each other are particularly preferred. Copolymers of monovinyl arenes and alpha alkyl monovinyl arenes which are not hydrogenated are described in U.S. Patent 3,932,332 which is hereby incorporated by reference.

The monovinyl arenes useful in preparing the melt flow modifier include styrene, ring alkylated styrenes such as vinyl toluene and t-butyl styrene, vinyl naphthalenes, ring halogenated styrenes such as the chlorostyrenes, and the like and mixtures thereof. Styrene is a preferred monovinyl arene.

The alpha alkyl monovinyl arenes useful in preparing the melt flow modifier include alpha methyl styrene, ring alkylated alpha methyl styrenes, alpha, alpha dialkyl styrenes and the like and mixtures thereof. Alpha methyl styrene is a preferred alpha alkyl monovinyl arene.

When a copolymer comprising substantially only monovinyl arenes and alpha alkyl monovinyl arenes is used as the melt flow modifier, the copolymer contains generally from 10 to 50, and preferably from 20 to 30% by weight monovinyl arene, and generally from 50 to 90, and preferably from 70 to 80% by weight alpha alkyl monovinyl arene. A particularly preferred copolymer is a copolymer of styrene and alpha methyl styrene.

Many compounds could not be used as melt flow modifiers in combination with the thermoplastic elastomer because such compositions would not have satisfactory melt flow. For example, compositions which have a melt index less than about 2.0 grams per ten minutes at 200°C do not have satisfactory melt flow. (For details of the melt index test, see ASTM D-1238). Even some of those compositions which have a melt index greater than about 2.0 grams per 10 minutes at 200°C are not useful in the present invention since in the melt index test, there is a force which pushes the material through an orifice whereas when powders are melted on a substrate, no force is applied to the molten powder particles. Thus, the compounds, useful as melt flow modifiers in the present invention must result in a final composition having sufficient melt flow under zero shear conditions.

Some compounds will form a mixture with the thermoplastic elastomer which has a melt index greater than 2.0 but are not compatible with the thermoplastic elastomer and thus result in opaque compositions. Others are compatible but do not provide enough plasticization to the phases to allow them to flow under zero shear. Finally, some compounds which are otherwise acceptable as melt flow modifiers are not useful in compositions used to coat glass bottles because they do not provide compositions which possess sufficient fragment retention.

Unlike the copolymers described in U.S. Patent 3,932,332, the polymers useful as the melt flow modifiers in the present invention must be at least partially hydrogenated, i.e., at least part of the arene nuclei must be saturated. If the arene nucleus is benzene, the hydrogenated product would thus be cyclohexane. The melt flow modifiers of the present invention are generally at least 20, and preferably from 30 to 90% hydrogenated.

Preferred melt flow modifiers for use in the present invention include a copolymer comprising 25% styrene and 75% alpha methyl styrene which is about 35% hydrogenated, has a softening point range between 42 and 62°C, has a number average molecular weight of 738, a weight average molecular weight of 1230, and a molecular weight distribution of 1.7. Another such polymer is a copolymer comprising 25% styrene and 75% alpha methyl styrene which is about 65% hydrogenated, has a softening point range between 45 and 65°C, has a number average molecular weight of 725, a weight average molecular weight of 1120, and a molecular weight distribution of 1.5.

By solubility parameter is meant the square root of the cohesive energy density. For a detailed discussion of this term, see "Polymer Handbook" Section IV, pp. 341—368 by Brandrup, J & Immrgut, E. H. (Interscience Division of John Wiley & Sons, N.Y., N.Y., 1966). The melt flow modifiers useful in the present invention may be chosen on the basis of their solubility parameters. The preferred melt flow modifier for a particular thermoplastic elastomer should have a solubility parameter between the solubility parameter of the aromatic portion and the conjugated diene or saturated diene portion of the thermoplastic elastomer. For example, a particularly preferred thermoplastic elastomer comprises 80% by weight substantially totally hydrogenated butadiene (having a solubility parameter of about 8) and 20% by weight styrene (having a solubility parameter of about 9). When this particularly preferred

thermoplastic elastomer is employed, the melt flow modifier should have a solubility parameter of generally from 6 to 11, and preferably from 8 to 9.

In the present invention there is employed from 25 to 90, and preferably from 50 to 70% by weight thermoplastic elastomer and from 10 to 75, and preferably from 30 to 50% by weight melt flow modifier.

The melt flow modifier useful in the present invention must contain aromatic portions which are at least partially hydrogenated in order that the melt flow modifier will be compatible with both the aromatic and aliphatic portions of the thermoplastic elastomers. The aromatic portion of the melt flow modifier is compatible with the aromatic portion of the thermoplastic elastomer and the hydrogenated or saturated portion of the melt flow modifier is compatible with the aliphatic portion of the thermoplastic elastomer.

In a preferred embodiment of the present invention, other materials known to those skilled in this art may be added to the composition of the present invention. These materials include adhesion promoters and stabilizers.

The adhesion promoters useful in the present invention are preferably silanes but, in the broadest aspect of the present invention, adhesion promoters such as titanates, isocyanates, epoxies, phenoxies, or others known to those skilled in the art may be employed. The preferred adhesion promoters are less than 8% by weight of the composition of substituted silanes or their corresponding silanols (i.e., the partially or fully hydrolyzed derivative of the silane) or the corresponding siloxanes (the polymeric form of the silanol) or mixtures of the silane, silanol and siloxane. The silane has the general formula:

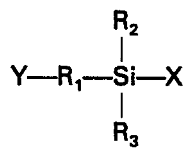

wherein Y is selected from the group consisting of mercapto, epoxy, amino, polymeric amino, methacryloxy, n-alkyls, aryls, halogenated derivatives of the foregoing and mixtures thereof: $R_1$ is selected from the group consisting of alkylene, isoalkylene, and cycloalkylene, each of 2 to 16 carbon atoms; X is selected from the group consisting of a halogen, hydroxyl, alkoxy, and acyloxy group; $R_2$ and $R_3$ are selected independently from the group consisting of $Y—R_1—$, $X—$, and methyl. The $R_1$ group may also contain more than one substituent group so long as no single carbon atoms holds more than one such group. Condensation products of the substituted alkyl silanes are also applicable.

Illustrative of suitable silanes within this structural formula are: gamma-glycidoxypropyl trimethoxysilane, beta-(3,4-epoxycyclohexyl)ethyl trimethoxysilane, beta-glycidoxyethyl triethoxysilane, beta-(3,4-epoxycyclohexyl) ethyl tri (beta-methoxyethoxy) silane, beta-(3-epoxyethylphenyl) ethyl trimethoxysilane, gamma-glycidoxypropyl dimethyl methoxy-silane, beta-(epoxy-ethyl) ethyl triethoxysilane, 4,5-epoxy-n-hexyl trimethoxysilane, 7,8-epoxy-n-octyl tripropoxysilane, 15,16-epoxy-n-hexadecyl trimethoxysilane, 3-methylene-7-methyl-6,7-epoxyoctyl trimethoxysilane, and their corresponding silanols and siloxanes; the mercapto alkyl silanes such as betamercaptoethyl trimethoxysilane, beta-mercaptopropyl trimethoxysilane, beta-(2-mercaptocyclohexyl) ethyl trimethoxysilane, beta-mercaptoethyl triethoxysilane, gamma-mercaptopropyl dimethyl methoxy-silane, beta-mercaptoethyl triacetoxysilane, and their corresponding silanols and siloxanes.

The adhesion promoters may generally be added to the melt in liquid form, i.e. in 100% concentration or as a dispersion in water, in $C_4—C_{16}$ hydrocarbon solvents such as pentane, hexane, heptane, benzene, toluene, xylene, etc., or in other organic solvents such as $C_2—C_6$ alkanols (e.g. isopropyl alcohol, sec.-butyl alcohol, etc.) $C_3—C_8$ ketones (e.g., acetone, methylethyl ketone, etc.) and chlorinated alkanes such as carbon tetrachloride, chloroform and ethylene dichloride. For the purpose of convenience herein and in the appended claims, the term "silane" will be understood to include the unhydrolyzed form (i.e. the silane), the partially or fully hydrolyzed form (i.e. the silanol), the condensation products resulting from the partially or fully hydrolyzed form of the silane (i.e., the siloxane, also known as poly-siloxane), and mixtures of the aforesaid forms. A particularly preferred adhesion promoter is gamma-glycidoxypropyl-trimethoxy silane.

The total amount of adhesion promoter may be incorporated within the tacky powder particles. However, in the non-tacky aspects of this invention, some of the total amount of adhesion promoter is preferably incorporated within the small hard non-tacky particles which are surface deposited on the tacky particles. Thus, in such an embodiment, part of the adhesion promoter may be incorporated in the tacky powder particles and part in the small, hard non-tacky powder particles. Alternatively, the non-tacky powder composition may be slurried in a dispersion of an adhesion promoter such as a silane in a suitable volatile solvent followed by evaporation of the solvent. The non-tacky powder composition is then coated with the adhesion promoter.

Finally, if the final powder composition is to be applied to a glass container, part or all of the adhesion promoter may be applied as a primer coat directly to the glass container itself.

The incorporation of at least part of the adhesion promoter in the tacky powder particles is

preferred. Particularly preferred is the incorporation of part of the adhesion promoter in the tacky powder particles and the remainder of the adhesion promoter is incorporated with the small, hard non-tacky particles.

The amount of adhesion promoter useful in the present invention is generally from 0.1 to 10% by weight of the entire powder composition. When the preferred silane adhesion promoters are employed, the amount of silane is generally from 0.1 to 8, and preferably from 2 to 5% by weight based upon the weight of the total composition.

The upper limit of this amount is determined by economic considerations and also by the fact that too large an amount of adhesion promoter might be incompatible with the rest of the powder composition and result in some degree of haziness.

Stabilizers may also be used in the composition of the present invention especially if the coated article is to have a long life. For example, the composition may comprise as a stabilizer less than 10%, and preferably from 1 to 3% by weight, of stabilizer against oxidation, stabilizer against ultraviolet light or a mixture thereof. The stabilizer against oxidation is effective to stabilize the composition during heating and aging, and the stabilizer against ultraviolet light is effective to stabilize the composition against weathering.

Such stabilizers are known to those skilled in the art and include 2,4-dihydroxy-benzophenone, substituted hydroxyphenyl benzotriazole, substituted benzotriazole, 2-hydroxy-4-(2-hydroxy-3-methacrylyloxy) propiobenzophenone, octylphenyl salicylate, resorcinol monobenzoate, 1,3,5-tri-methyl-2,4,6-tris (3,5-ditert-butyl-4-hydroxybenzyl) benzene, octadecyl 3-(3,5-ditert-butyl-4-hydroxyphenyl) propionate, tetra-bis methylene 3-(3,5-ditert-butyl-4-hydroxyphenyl)-propionate methane, 2(4-hydroxy-3,5-tertiary butyl anilino)4,6-bis(n-octyl thio) 1,3,5-triazine, zinc dibutyldithiocarbamate, 2,2-methylene-bis(4-methyl-6-tertiary butyl phenol), 2,2′-methylene bis(4-ethyl-6-tert-butyl phenol), 4,4-thiobis(6-tertiary-butyl m-cresol), tri (nonylated phenyl) phosphite, nickel dibutyl dithiocarbamate, and dibutyl thiourea.

Mixtures of two or more of these stabilizers can also be used.

The non-tacky powder composition of the present invention can be prepared by first melt blending a first composition comprising the thermoplastic elastomer and melt flow modifier. This melt blending step can take place in any apparatus known to those skilled in this art, such as a plastograph or a twin screw melt extruder.

This melt blending step must be carried out at a temperature which is high enough to provide sufficient flow while the composition is molten but low enough so that the composition does not discolour. Such temperatures are generally from 100 to 250°, and preferably from 130 to 160°C.

The molten composition must next be cooled until it solidifies. Cooling may be done in air or by passing the molten material through a water bath. When a silane is used as an adhesion promoter in the present invention, the molten composition is preferably air cooled. Water content with the silane should be kept to a minimum since water appears to affect the adhesion properties of the silane.

The solid composition is then pelletized and the pellets are ground to desired particle size.

The particles can be ground by using any apparatus known to those skilled in this art. Such apparatus include the Micropul pulverizer, an Abbe mill, a Wiley mill and pin mills.

The powder particles prepared according to this process are tacky and tend to agglomerate thus making spraying difficult. To solve the tackiness problem, the powder particles can be dry blended with at least one of the melt flow modifiers described hereinabove and the provision that this melt flow modifier must itself be non-tacky, i.e., it must have a glass transition temperature of at least 20, and preferably at least 40°C.

The term "glass transition temperature" as used in this application means the temperature at which the melt flow modifier changes from a brittle, vitreous state to a plastic state.

When the tacky powder particles are dry blended with the non-tacky particles, the non-tacky particles adhere to the surface of the tacky particles in a non-continuous layer to form composite powder particles which do not agglomerate.

The powder composition of the present invention comprises from 3 to 20, and preferably from 8 to 12% of the small, hard, non-tacky particles comprising the adhesion promoter, and from 80 to 97, and preferably from 88 to 92% by weight of the tacky powder particles.

The non-tacky particles comprising the adhesion promoter having a glass transition temperature greater than 20°C can additionally contain incorporated therein part of the adhesion promoter as described hereinabove. Thus, the non-tacky powder particles comprise generally from 90 to 100, and preferably from 95 to 97% by weight melt flow modifier and generally from 0 to 10, and preferably from 3 to 5% by weight adhesion promoter.

As noted hereinabove, part of the adhesion promoter may be added as a primer coat directly to the surface to be coated rather than including it within the powder particles. Alternatively, instead of incorporating all of the adhesion promoter within the particular or applying part of the adhesion promoter as a primer coat, part of the adhesion promoter may be applied as a film surrounding the final powder particle. This film increases the adhesion of the particle to the bottle surface. Combinations of these methods may also be used.

If a mixture of a melt flow modifier and an adhesion promoter is used to form the non-tacky

powder particles, this mixture is first melt blended in any apparatus known to those skilled in this art as a plastograph or a single screw compounding extruder or a mixing extruder or a twin screw melt extruder. This extrudate is then cooled in air or water to form a solid composition. This solid composition is then formed into a powder using such apparatus as a knife edge chopping mill or an impact mill.

This second powder composition is then dry blended with the first powder composition by any means known to those skilled in this art. The blended powders are then comminuted into a fine powder at temperatures below the embrittlement temperature of the B block portion of the thermoplastic elastomer. The dry blended powder composition may, for example, be added to an impact pulverizer where the powders are ground using liquid nitrogen as a cooling medium.

The non-tacky powder particles, comprising the melt flow modifier and possibly the adhesion promoter, and the tacky powder particles may be first dry blended and then comminuted, or preferably, they may be dry blended and comminuted simultaneously by, for example, dry blending the two kinds of particles in an impact pulverizer.

Since the embrittlement temperature of the thermoplastic elastomer is generally less than −30, down to less than −125°C, the powder mixture should be comminuted at temperatures generally less than −30, and preferably less than −125°C.

The particle size of this powder composition may be generally from 50 to 300, and preferably from 100 to 200 micrometers. The lower limit of particle size is based principally upon the economics of low temperature grinding whereas the upper limit is set because of the need to achieve smooth coating and ease of application with finer powders.

The present process may be carried out in a batch, continuous, or semi-continuous manner as described.

The powder particles produced according to the present invention are generally useful in any application where good melt flow is needed under zero shear conditions. Such applications include roto-casting and coating of containers, particularly glass bottles.

Although the powder particles thus produced are generally useful in any application where good melt flow is needed under zero shear conditions, they are particularly useful for coating glass bottles to render them fragment retentive and reusable.

The first coating of powder particles is applied to a glass container such as a glass bottle which is clean and dry. The bottle can be coated with a lubricity size. Such sizes are well known to those skilled in this art. They include polyethylene, tin compounds, and titanium compounds.

The surface of the bottle to be sprayed can be vigorously scrubbed with a warm water solution containing cleaning agent. The bottle can then be thoroughly rinsed with warm tap water and then followed with an acetone rinse to remove the water. The bottles are then air dried.

The powder particles which are used for the base-coat should also be thoroughly dried before use. The powder particles are preferably dried for about ten hours in a vacuum oven at about room temperature.

The powder particles may be applied by any means known to those skilled in this art. For example, the powder particles may be applied by electrostatic spraying, or fluidized bed. Electrostatic spraying is preferred and the following description of the coating process involves the use of electrostatic spraying.

The bottles are first placed in an oven for the purpose of preheating. The temperature used in the preheat oven depends upon the composition of the powder particles that will be sprayed. Temperatures generally from 100 to 350, and preferably from 150 to 180°C can be employed.

The amount of time the bottles are in the preheat oven also depends upon the composition of the powder particles that will be sprayed onto the bottles. Residence times of generally from 0.5 to 40, and preferably from 10 to 20 minutes can be employed.

While the powder particles are being sprayed onto the container, the container can be gently turned by a low speed stirring motor. When the container is sufficiently coated with the powder particles, it is removed for baking. At this point, the preheated container still looks white and powdery. It is fused but not melted at this point.

The pressure which is required to feed the powder particles through the electrostatic spraying gun is dependent upon the stability rating of the powder particles. The powder particle stability rating is a qualitative rating and ranges from 1 to 5 with a powder having a rating of 1 defined as a free flowing powder having no lumps and capable of being stored without agglomeration. A powder having a rating of 2 is defined as one which has lumps which can be broken up with mild agitation. A powder having a rating of 3 is defined as one which has lumps which can be broken up only with violet agitation. A powder having a rating of 4 is defined as one which contains large lumps which cannot be broken up even with violet agitation. A powder having a rating of 5 is defined as a completely coalesced lump of polymer.

The powder particles of the present invention have powder stability ratings of generally less than 3.0, and preferably less than 1.5.

When the powder stability rating approaches 1, the pressure within the electrostatic spray gun is relatively uniform whereas when the powder stability rating approaches 5, the pressure within the feed system fluctuates due to the blocking caused by the larger particles.

After being sprayed, the glass bottle is placed in an oven which is at a temperature of generally from 180 to 300, and preferably from 215 to 235°C, for generally from 1 to 40, and preferably from 15 to 25 minutes.

The bottle is then removed from the oven and allowed to air cool to room temperature. The weight of powder particle that is coated on the glass bottle is generally at least 6 and preferably at least 15 grams in order to achieve a glass fragment retention of at least 90% on a 64 fluid ounce bottle which weighs approximately 830 grams.

The amount of powder composition needed to achieve a particular glass fragment retention level varies with the kind of thermoplastic used as well as with the relative amounts of thermoplastic elastomer and melt flow modifier.

When a second coating is to be applied, the bottle is then again preheated at an oven temperature of generally from 60 to 350, and preferably from 100 to 120°C for 0.5 to 30, and preferably from 10 to 20 minutes.

The topcoat comprises at least one synthetic resin. The synthetic resins useful in the present invention are selected from those having abrasion resistance, wet and dry scratch resistance, chemical resistance, oil resistance, weather resistance and clarity. Such resins include epoxy resins, polyurethanes, polycarbonates, polyesters, polystyrenes, cellulosic resins such as cellulose acetate, and cellulose nitrate, polyvinyl chloride, polyamides, fluorocarbons, acrylic homopolymers and copolymers.

Acrylic homopolymers and copolymers are preferred for use in the present invention. The term acrylic resin as used herein includes any polymer, whether thermosetting or thermoplastic, which is prepared by the free-radical addition polymerization of one or more ethylenically unsaturated monomers, at least 40 weight percent of which is selected from the group consisting of acrylic and methacrylic acid, alkyl cycloalkyl, and aralkyl esters of acrylic and methacrylic acids, wherein the ester moiety contains from 1 to about 18 carbon atoms, and the hydroxyalkyl esters of acrylic and methacrylic acids, wherein the hydroxyalkyl moiety contains from 2 to about 10 carbon atoms.

Examples of suitable alkyl, cycloalkyl, aralkyl, and hydroxyalkyl esters of acrylic and methacrylic acids include, among others, methyl acrylate, ethyl acrylate, isopropyl acrylate, n-butyl acrylate, t-butyl acrylate, 2-ethylhexyl acrylate, methyl methacrylate, n-butyl methacrylate, 2-ethylhexyl methacrylate, beta-hydroxyethyl acrylate, beta-hydroxyethyl methacrylate, beta-hydroxypropyl acrylate and beta-hydroxypropyl methacrylate.

The remaining 60 weight percent or less of said ethylenically unsaturated monomers consists of at least one monomer selected from the group consisting of:

(1) acrylic monomers other than those cited hereinabove, which monomers generally encompass reactive esters of acrylic and methacrylic acids, such as glycidyl methacrylate, 2-aminoethyl acrylate, 2-aminopropyl methacrylate, 3-aminopropyl methacrylate, and the like;

(2) amides, alkylol amides, and alkoxyalkyl amides of acrylic and methacrylic, and acids, wherein the alkyl moieties contain from 1 to 4 carbon atoms and the alkoxy moiety contains from 1 to 8 carbon atoms, specific examples being acrylamide, methacrylamide, methylol acrylamide, methoxymethyl methacrylamide, butoxymethyl acrylamide, diacetone acrylamide, and the like;

(3) alpha, beta-ethylenically-unsaturated dicarboxylic acids and anhydrides, such as maleic acid, maleic anhydride, fumaric acid, itaconic acid, mesaconic acid, and the like;

(4) mono- and diesters of alpha, beta-ethylenically unsaturated dicarboxylic acids, examples of which esters are fumaric monoethyl ester, dimethyl itaconate, diisopropyl maleate, dicyclohexyl maleic, maleic acid mono (beta-hydroxyethyl) esters, and the like;

(5) alpha, beta-ethylenically-unsaturated nitriles, such as acrylonitrile, methacrylonitrile, ethacrylonitrile, and the like;

(6) vinyl aromatic compounds, such as styrene, vinyltoluene, vinyl naphthalene, chlorostyrene, bromostyrene, and the like;

(7) monounsaturated hydrocarbons, such as ethylene, propylene, and the like.

Acrylic copolymers which contain from 5 to 20% by weight hydroxypropyl methacrylate, 0 to 4% by weight acrylic or methacrylic acid and the remainder being styrene or a $C_1$ to $C_8$ alkyl ester of acrylic or methacrylic acid is preferred.

When the preferred thermoset acrylic polymers are used as the topcoat in the present invention, the acrylic powder particles include a curing agent for the acrylic polymer.

Typical curing agents include multifunctional isocyanates such as toluene isocyanate, polyols, polycarboxylic acids, hydroxylcarboxylic acids, polyamines, hydroxylamines and other compounds known to those skilled in this art.

One such curing agent comprises a blocked triisocyanate, prepared by reacting three moles of 1 - isocyanato - 3 - isocyanato - methyl - 3,5,5 - trimethylcyclohexane with one mole of 1,1,1 - tris - (hydroxymethyl) propane in methyl isobutyl ketone followed by blocking with methyl ethyl ketoxime.

A preferred curing agent is methylene bis cyclohexyl diisocyanate blocked with caprolactam.

The curing agent may be present in small amounts, generally from 20 to 50, and preferably from 30 to 40% by weight of the synthetic resin and curing agent.

The synthetic resin topcoat can be applied by any method known to those skilled in this art. For example, the topcoat can be applied as a solution or as a dispersion of the synthetic resin in an appropriate solvent or liquid.

Alternatively, the synthetic resin topcoat can be applied as a powder. The topcoat can be applied by a spraying or a dipping technique.

The topcoat can contain less than 10, and preferably from 1 to 3% by weight of the stabilizers against oxidation and ultraviolet light.

The bottle is then heated in a baking oven which is at a temperature of from 150 to 350, and preferably from 175 to 200°C for generally from 0.5 to 30, and preferably from 15 to 20 minutes. The temperature must be such as to allow the topcoat to flow out and cure.

The bottle is then cooled to substantially ambient temperatures. These bottles are then found to be both fragment retentive and reusable.

Bottles coated with the compositions of the present invention are fragment retentive. By "fragment retentive" is meant that there is a certain degree of glass retention when a filled glass bottle is dropped according to the following test procedure. The test bottles are weighed and then filled with 0.1 molar citric acid/water solution from a stock solution.

Three and six-tenths percent of the volume is displaced with a stainless steel plug of exact size so as to leave a 3.6% headspace when removed. Then 0.4 grams/fluid ounce (28.41 ml) of sodium bicarbonate tablets are added to the bottles. The bottle is immediately capped and allowed to equilibrate overnight at 72°C. The bottles should have a pressure of approximately 60 psi (4.137 bar).

The pressurized bottles are then tested for fragment retention in a bottle drop chamber. The bottle drop chamber comprises a platform on an electrically operated lift with a calibrated height control and a remote electrical platform release. The platform is centered over a heavy stainless steel plate approximately three square feet which is set in concrete. The chamber is enclosed for safety with heavy rubberized fabric and a polymethyl methacrylate observation panel.

The pressurized bottles are placed sideways on the drop platform at a height of 4 feet (1.22 m), the chamber is closed, and the platform released. All pieces of glass within a 3 foot (0.91 m) diameter circle are collected, dried and weighed. The ratio of the final weight of the glass pieces divided by the original bottle weight, expressed as a percentage, is the percentage retention.

The glass bottles coated with the powder composition of the present invention have glass fragment retention of generally at least 50%, and preferably at least 95%.

By "reusable" is meant that the bottle coating is not substantially removed or destroyed during the cleaning and sterilization procedures commonly employed by carbonated beverage bottling companies. Several tests may be designed to determine whether a particular coating is deemed capable of withstanding such procedure.

The coated bottles of the present invention are subjected to the following test. The coating of each bottle is slit through to the glass with a pointed razor edge knife. The coated bottle is then immersed in an aqueous solution comprising 4.5% by weight sodium hydroxide and 0.5% by weight sodium phosphate tribasic. This solution is maintained at 72°C in an insulated seven gallon tank. The tank has a thermostatically controlled electrical heater capable of maintaining the temperature at 72°C±2°C.

The bottle is removed every hour and rinsed lightly with warm water. The slit is picked at with a fingernail to determine the adhesion of the coating to the glass. Then a few drops of 50/50% by weight ethanol/water solution containing 1% by weight phenolphthalein is rubbed light into the slit to determine whether any of the sodium hydroxide solution has crept laterally under the coating from the slit. The coating is also observed for any signs of discolouration or haziness or any other signs of coating failure.

Coating failure is defined as either looseness of the coating or creepage of the sodium hydroxide solution. The longer the coated bottles can remain in the sodium hydroxide solution without deleterious result, the better these bottles will function as "returnable" bottles.

The coating bottles of the present invention can remain in the sodium hydroxide solution at least 1, and preferably at least 8 hours without any sign of substantial coating looseness or caustic creepage.

The present invention is further illustrated by the following examples. All parts and percentages in the examples as well as in the specification and claims are by weight unless otherwise specified.

Example 1

A composition comprising 2678.6 grams of a Solprene (Trade Mark) thermoplastic elastomer having a number average molecular weight of 70,000, 1589 grams of Hercules XPS 541, copolymer of 25% by weight of styrene and 75% by weight alpha methylstyrene (approximately 65% hydrogenated), 181 grams of gamma-glycidoxypropyl-trimethoxy silane and 90.8 grams of tetra-bis methylene 3 - (3,5 - ditertiary - butyl - 4 - hydroxyphenyl) - propionate methane are placed in a twin screw melt extruder at 135°C. The thermoplastic elastomer comprises a block copolymer comprising 20% styrene having a number average molecular weight of 16,000 and 80% hydrogenated butadiene having a

number average molecular weight of 60,000, wherein the styrene blocks are on the end of the polymer and the hydrogenated butadiene blocks are midblocks. The conjugated diene is substantially completely hydrogenated, i.e., more than about 98% of the double bonds are saturated. The hydrogenated butadiene mid-block contains about 84% ethylene groups and about 16% butylene groups.

When the molten composition exits from the extruder it is air cooled to room temperature (about 25°C), and then chopped into a coarse powder. The powder is then re-extruded in the same manner to obtain a more uniform composition. The extrudate is then re-ground to form a powder. The coarse powder is then placed in a pulverizer and cryogenically ground using liquid nitrogen at a temperature of about −190°C. The coarse powder is ground to a fine powder having a diameter of about 250 micrometers.

The particles are applied by electrostatically spraying onto a 64 fluid ounce (1.82 litres) glass bottle which has been preheated to about 150°C. The coated bottle is then baked in a force convection oven at 225°C for 20 minutes until a rather smooth coating is produced. The coated bottle is then cooled to room temperature.

The bottle has a coating which is substantially clear such that one can read through the bottle, writing, which is on normal typewritten page. The page is wrapped around the outside of the bottle with the typed portion facing toward the inside of the bottle.

Example 2

A first composition comprising 2,945 grams of a Solprene thermoplastic elastomer having a number average molecular weight of 70,000, 1586 grams of Hercules XPS 541 random copolymer of 25% by weight of styrene and 75% by weight alpha methylstyrene (approximately 65% hydrogenated), 181 grams of gamma-glycidoxypropyl-trimethoxy silane and 91 grams of tetra-bis methylene 3 - (3,5 - ditertiary - butyl - 4 - hydroxyphenyl) - propionate methane are placed in a twin screw melt extruder at 135°C. The thermoplastic elastomer comprises a block copolymer comprising 20% styrene having a number average molecular weight of 16,000 and 80% hydrogenated butadiene having a number average molecular weight of 60,000 wherein the styrene blocks are on the end of the polymer and the hydrogenated butadiene blocks are midblocks. The conjugated diene is substantially completely hydrogenated, i.e., more than about 98% of the double bonds are saturated. The hydrogenated butadiene midblock contains about 84% ethylene groups and about 16% butylene groups.

When the molten composition exits from the extruder it is air cooled to room temperature (about 25°C) and then chopped into pellets having a length of about 1/8th inch (3.2 mm) and a diameter of about 1/8th inch (3.2 mm).

A second composition comprising 512 grams of the Hercules XPS 541 polymer and 21.3 grams of the silane are separately melt blended in the extruder and then air cooled at room temperature. The solid composition is then broken into a powder using a knife chopping mill.

The pellets of the first composition and the powder of the second composition are then placed in an impact pulverizer and cryogenically ground using nitrogen at a temperature of about −190°C. The pellets are ground to a powder having a diameter of less than about 250 micrometers.

The final powder particles comprise a comparatively large tacky particle with comparatively smaller, hard, non-tacky particles adhering thereto. The larger particles contain the thermoplastic elastomer, melt flow modifier, adhesion promoter, and stabilizer. The smaller particles contain the melt flow modifer and the adhesion promoter.

The powder particles of the present invention are hard and non-tacky and do not coalesce even after 336 hours.

A 64 fluid ounce (1.82 litres) glass bottle is vigorously scrubbed with a warm water solution containing cleaning agent. The bottle is then thoroughly rinsed with warm tape water and then followed with an acetone rinse to remove the water. The bottles are air dried and then placed in a forced convection oven which is preheated to about 150°C for about 15 minutes.

The powder particles which are used for the basecoat are dried for about ten hours in a vacuum oven at about room temperature. The powder particles are applied using an electrostatic spraying gun.

The bottle is then electrostatically sprayed with 40 to 50 grams of the powder particles prepared as described above.

While the powder particles are being sprayed onto the bottle, the bottle is gently turned by a low speed stirring motor. When the bottle is sufficiently coated with powder particles, it is removed for baking. At this point, the preheated bottle still looks white and powdery. It is fused but not melted.

After being sprayed, the bottle is placed in an oven which is at a temperature of 225°C for 20 minutes.

The bottle is then removed from the oven and allowed to air cool to room temperature. The weight of powder particle that is coated on the glass bottle is 11.7 grams.

The bottle is then again preheated in preparation for the application of the second or topcoat coating. The coated bottle is preheated at a temperature of 115°C for 15 minutes.

The topcoat is a thermosetting acrylic polymer which is electrostatically sprayed onto the bottle.

The acrylic polymer contains within its 28.3% by weight of methylene bis cyclohexyl diisocyanate blocked with caprolactam.

The bottle is then cured in a baking oven which is at a temperature of 190°C for 20 minutes. The bottle contains 19.8 grams of topcoat.

The coated bottle is then subjected to the following test. The coating of the bottle is slit through to the glass in two places and the bottle is immersed in an aqueous solution comprising 4.5% by weight sodium hydroxide and 0.5% by weight sodium phosphate tribasic. This solution is maintained at 72°C in an insulated seven gallon tank. The tank has a thermostatically controlled electrical heater capable of maintaining the temperature at 72°C±2°C.

The bottle is removed every hour and rinsed lightly with warm water. The slits are picked at with a fingernail to determine the adhesion of the coating to the glass. Then a few drops of 50/50% by weight ethanol/water solution containing 1% by weight phenolphthalein is rubbed lightly into the slits to see whether any of the sodium hydroxide solution has crept laterally under the coating from the slits. The coating is also observed for any signs of discoloration or haziness or any other signs of coating failure.

The coating around both slits does not have any sign of substantial coating looseness or caustic creepage for over 8 hours.

This bottle is found to have a fragment retention of 97.8%.

Examples 3—6

Example 2 is repeated with the exception of the differences noted in Table I. In Table I, "large particle" means the tacky particle before it is coated with the non-agglomerating agent. By "small particle" is meant the smaller particles used to keep the larger particles from agglomerating.

TABLE I

| Example no. | Powder stability rating | Large particle (%) | | | |
|---|---|---|---|---|---|
| | | T.E.[A] | M.F.N.[B] | A.P.[C] | Stab.[D] |
| 3 | 1.2 | 58 | 31.2 | 3.8 | 1.9 |
| 4 | 1.2 | 56.2 | 30.3 | 3.7 | 1.84 |
| 5 | 1.1 | 52.9 | 31.7 | 3.6 | 1.8 |
| 6 | 1.1 | 52.9 | 31.7 | 3.6 | 1.8 |

| Example no. | Small particle (%) M.F.M.[B] | A.P.[C] | Film appearance |
|---|---|---|---|
| 3 | 4.8 | .2 | Slightly yellow |
| 4 | 7.68 | .3 | Slightly yellow |
| 5 | 9.8 | .2 | Slightly yellow |
| 6 | 10.0 | 0 | Slightly yellow |

| Example no. | Fragment retention | Basecoat wt. (g) | Topcoat wt. (g) | Caustic test[E] |
|---|---|---|---|---|
| 3 | 99.4 | 14.4 | 18.2 | 8 (very slight creep) |
| 4 | 98.9 | 15.2 | 14.7 | 8 |
| 5 | 70 | 10.6 | 17.3 | 6 |
| 6 | 98 | 14.1 | 13.2 | 5 |

[A]=Thermoplastic elastomer
[B]=Melt flow modifier
[C]=Adhesion promoter
[D]=Stabilizer
[E]=Caustic test: number of hours that the coated bottle (with the slit) can remain in the caustic solution without substantial loosening of the film or substantial creepage.

The principles, preferred embodiments, and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in this art without departing from the spirit of the invention.

**Claims**

1. A powder composition useful for coating applications comprising a melt blend mixture of

a) from 25 to 90% by weight of a block copolymer which is selectively hydrogenated to at least some degree and having at least two kinds of polymer blocks wherein one polymer block is designated by A and a second polymer block is designated by B such that prior to hydrogenation,

1) each A is a polymer end block of a monovinyl or alpha alkyl monovinyl arene having a number average molecular weight in the range of from 5,000 to 75,000, said blocks A comprising from 5 to 50% by weight of the total block copolymer, and

2) each B is a polymer mid block having a number average molecular weight of from 30,000 to 300,000, and formed from a conjugated diene selected from homopolymers of at least one conjugated diene having 4 to 10 carbon atoms per molecule, said blocks B comprising from 50 to 95% by weight of the total block copolymer, and

b) from 75 to 10% by weight of at least one melt flow modifier selected from

1) monovinyl arene homopolymers,
2) alpha alkyl monovinyl arene homopolymers, and
3) copolymers of monovinyl arenes and alpha alkyl monovinyl arenes,

wherein the aromatic portions of the polymers described in b) 1), 2), and 3) are at least partially hydrogenated to remove the aromatic character thereof, the powder composition having good melt flow characteristics under zero shear conditions.

2. The powder composition of claim 1 comprising from 50 to 70% by weight of ingredient (a) and 50 to 30% by weight of ingredient (b).

3. The powder composition of claim 1 or 2, additionally comprising as an adhesion promoter less than 8% by weight of substituted silane, the corresponding silanol, siloxane, or a mixture of any thereof.

4. The powder composition of any of claims 1 to 3 comprising as a stabilizer less than 10% by weight of stabilizer against oxidation, stabilizer against ultraviolet light, or a mixture of any thereof.

5. A non-tacky powder composition useful for coating applications which comprises

α) from 80 to 97% by weight of tacky powder particles comprising a melt blend mixture of ingredients (a) and (b) as defined in claim 1 or 2 (but in which the block copolymer (a) may be either unhydrogenated or selectively hydrogenated to at least some degree), and, adhering to the tacky surface of these tacky particles in a non-continuous layer,

β) from 20 to 3% by weight of smaller solid particles which are hard and non-tacky and which comprises at least one melt flow modifier selected from the group defined in item (b) of claim 1 with the proviso that the melt flow modifier has a glass transition temperature of at least 20°C.

6. The powder composition of claim 5, wherein the tacky powder particles additionally comprise as an adhesion promoter less than 8% by weight of substituted silane, the corresponding silanol, siloxane, or a mixture of any thereof, and as a stabilizer less than 10% by weight of stabilizer against oxidation, stabilizer against ultraviolet light, or a mixture of any thereof.

7. A process for preparing the powder composition of claim 5 or 6 which comprises

i) melt blending a mixture of ingredients (a) and (b) as defined in claim 5,
ii) cooling the melt blended mixture to form a solid,
iii) pelletizing the resulting solid,
iv) dry blending the resulting pelletized composition with a hard, non-tacky solid as defined in claim 5, and
v) comminuting the resulting dry blend at a temperature below the embrittlement temperature of the B block portion of the thermoplastic elastomer to form hard, non-tacky powder particles which adhere to the surface of the particles of the pelletized composition to form composite particles which are non-tacky and do not coalesce.

8. A process for coating a glass container in order to prevent or reduce the scattering of glass fragments, on breaking of the container, the said process comprising

A) preheating the glass container,
B) applying on the external wall surface of the container the powder composition of any of claims 1 to 4, 5 or 6, or prepared by the process of claim 7,
C) baking the container until the powder composition becomes molten and forms a smooth, molten coating on the glass surface,
D) applying to the thus coated container a synthetic resin selected from epoxy resin, polyurethane, polycarbonate, polyester, polystyrene, ethylene/vinyl acetate copolymer and acrylic homopolymer and copolymer so that the synthetic resin is applied to substantially the entire surface of the first coating and also to a part of the glass container surface,

E) baking the thus coated container until the synthetic resin forms a smooth coating, and
F) cooling the thus coated container to substantially ambient temperature.

9. The coated glass container obtained by the process of claim 8.

**Revendications**

1. Composition pulvérulente utile pour des applications de revêtement comprenant un mélange mélangé à l'état fondu de

a) de 25 à 90% en poids d'un copolymère séquencé qui est sélectivement hydrogéné au moins à un certain degré et ayant au moins deux sortes de blocs de polymère où un block de polymère est désigné par A et un second bloc de polymère est désigné par B de façon qu'avant hydrogénation,

1) chaque A soit un bloc extrême de polymère d'un monovinyl ou alpha alkyl monovinyl arène ayant un poids moléculaire moyen en nombre compris entre 5.000 et 75.000, lesdits blocs A formant de 5 à 50% en poids du copolymère séquencé total, et
2) chaque B soit un block médian de polymère ayant un poids moléculaire moyen en nombre de 30.000 à 300.000 et formé d'un diène conjugué choisi parmi des homopolymères d'au moins un diène conjugué ayant 4 à 10 atomes de carbone par molécule, lesdits blocs B comprenant de 50 à 95% en poids du copolymère séquencé total, et

b) de 75 à 10% en poids d'au moins un agent modificateur d'écoulement à l'état fondu choisi parmi

1) homopolymères de monovinyl arène,
2) homopolymères d'alpha alkyl monovinyl arène, et
3) copolymères de monovinyl arènes et alpha alkyl monovinyl arènes,

où les portions aromatiques des polymères décrits en b) 1), 2) et 3) sont au moins partiellement hydrogénées pour leur retirer leur caractère aromatique, la composition pulvérulente ayant de bonnes caractéristiques d'écoulement à l'état fondu en conditions de cisaillement nul.

2. Composition pulvérulente selon la revendication 1, comprenant de 50 à 70% en poids de l'ingrédient (a) et de 50 à 30% en poids de l'ingrédient (b).

3. Composition pulvérulente selon la revendication 1 ou 2, comprenant de plus comme agent favorisant l'adhérence moins de 8% en poids de silane substitué, le silanol, siloxane correspondant ou un mélange de ceux-ci.

4. Composition pulvérulente selon l'une des revendications 1 à 3, comprenant comme agent stabilisant moins de 10% en poids d'un agent stabilisant contre l'oxydation, stabilisant contre la lumière ultraviolette ou un mélange.

5. Composition pulvérulente non poisseuse utile pour des applications de revêtement qui comprend

α) de 80 à 97% en poids de particules pulvérulentes poisseuses comprenant un mélange mélangé à l'état fondu d'ingrédients (a) et (b) comme définis à la revendication 1 ou 2 (mais où le copolymère séquencé (a) peut être soit non hydrogéné ou sélectivement hydrogéné à au moins un certain degré), et, adhérant à la surface poisseuse de ces particules poisseuses en une couche non continue,
β) de 20 à 3% en poids de plus petites particules solides qui sont dures et non poisseuses et qui comprennent au moins un modificateur de l'écoulement à l'état fondu choisi dans le groupe défini à l'article (b) de la revendication 1 à condition que le modificateur de l'écoulement à l'état fondu ait une température de transition vitreuse d'au moins 20°C.

6. Composition pulvérulente selon la revendication 5, où les particules pulvérulentes poisseuses comprennent de plus comme agent favorisant l'adhérence moins de 8% en poids de silane substitué, de silanol, siloxane correspondant ou un mélange, et comme agent stabilisant moins de 10% en poids d'agent stabilisant contre l'oxydation, stabilisant contre la lumière ultraviolette ou un mélange de ceux-ci.

7. Procédé de préparation de la composition pulvérulente selon la revendication 5 ou 6 qui consiste à

i) mélanger à l'état fondu un mélange des ingrédients (a) et (b) comme définis à la revendication 5,
ii) refroidir le mélange mélangé à l'état fondu pour former un solide,
iii) mettre en boulettes le solide résultant,
iv) mélanger à sec la composition résultante en boulettes avec und solide dur et non poisseux comme défini à la revendication 5 et,

v) broyer le mélange sec résultant à une température inférieur à la température de fragilisation de la partie de block B de l'élastomère thermoplastique pour former des particules pulvérulentes dures et non poisseuses qui adhèrent à la surface des particules de la composition en boulettes pour former des particules composées qui sont non poisseuses et ne se combinent pas.

8. Procédé de revêtement d'un récipient en verre afin d'empêcher ou de réduire la dispersion des fragments de verre à la rupture du récipient, ledit procédé consistant à

A) préchauffer le récipient en verre,
B) appliquer sur la surface de paroi externe du récipient, la composition pulvérulente selon l'une quelconque des revendications 1 à 4, 5 ou 6 ou bien préparée par le procédé de la revendication 7,
C) cuire le récipient jusqu'à ce que la composition pulvérulente se trouve fondue et forme un revêtement fondu et lisse sur la surface du verre,
D) appliquer au récipient ainsi revêtu une résine synthétique choisie parmi une résine époxy, du polyuréthane, un polycarbonate, un polyester, un polystyrène, un copolymère d'éthylène/acétate de vinyle et une homopolymère et copolymère acrylique de façon que la résine synthétique soit appliquée sensiblement à toute la surface du premier revêtement et également à une partie de la surface du récipient en verre,
E) cuire le récipient ainsi revêtu jusqu'à ce que la résine synthétique forme un revêtement lisse, et
F) refroidir le récipient ainsi revêtu sensiblement à la température ambiante.

9. Récipient de verre revêtu obtenu par le procédé de la revendication 8.

**Patentansprüche**

1. Eine für Überzugs- und Beschichtungszwecke geeignete Pulvermasse, enthaltend ein in der Schmelze bereitetes Gemisch von

a) 25 bis 90 Gew.-% eines Blockmischpolymerisats, das selektiv bis zu wenigstens einem gewissen Grad hydriert ist und wenigstens zwei Arten von Polymerblöcken enthält, worin ein Polymerblock mit A und eine zweiter Polymerblock mit B bezeichnet ist, in einer solchen Weise, daß vor dem Hydrieren

1) jedes A ein Polymerendblock eines Monovinyloder $\alpha$-Alkylmonovinylarens mit einen Zahlenmittelmolekulargewicht im Bereich von 5000 bis 75.000 ist, wobei die Blöcke A 5 bis 50 Gew.-% des gesamten Blockmischpolymerisats ausmachen, und
2) jedes B eine mittelständiger Polymerblock mit einem Zahlenmittelmolekulargewicht von 30.000 bis 300.000 ist und aus einem konjugierten Diene, ausgewählt aus Homopolymeren von wenigstens einem konjugierten Dien mit 4 bis 10 Kohlenstoffatomen im Molekül, gebildet ist, wobei die genannten Blöcke B 50 bis 95 Gew.-% des gesamten Blockmischpolymerisats ausmachen, und

b) 75 bis 10 Gew.-% wenigstens eines den Schmelzfluß modifizierenden Mittels, ausgewählt aus

1) Monovinylarenhomopolymerisaten,
2) $\alpha$-Alkylmonovinylarenhomopolymerisaten und
3) Copolymerisaten von Monovinylarenen und $\alpha$-Alkylmonovinylarenen,

worin die aromatischen Teile der in b) 1), 2) und 3) beschriebenen Polymerisate wenigstens teilweise so weit hydriert sind, daß ihr aromatischer Charakter entfernt worden ist und die Pulvermassen unter scherbedingungen von Null gute Schmelzflußeigenschaften aufweisen.

2. Die Pulvermasse nach Anspruch 1, enthaltend 50 bis 70 Gew.-% des Bestandteils (a) und 50 bis 30 Gew.-% des Bestandteils (b).

3. Die Pulvermasse nach Anspruch 1 oder 2, zusätzlich enthaltend als Haftmittel weniger als 8 Gew.-% von substituiertem Silan, des entsprechenden Silanols, Siloxans oder eines Gemisches biliebiger dieser Verbindungen.

4. Die Pulvermasse nach irgendeinem der Ansprüche 1 bis 3, enthaltend als Stabilisator weniger als 10 Gew.-% Stabilisator gegen Oxidation, Stabilisator gegen UV-Licht oder eines Gemisches beliebiger dieser Verbindungen.

5. Eine für Überzugs- und Beschichtungszwecke geeignete nichtklebrige Pulvermasse, enthaltend

$\alpha$) 80 bis 97 Gew.-% klebrige Pulverteilchen, enthaltend eine Schmelzgemisch der Bestandteile (a) und (b), wie in Anspruch 1 oder 2 definierte (worin jedoch das Blockmischpolymerisat (a) entweder unhydriert oder bis zu wenigstens einem gewissen Grade selektiv hydriert sein kann), und, an der kleibrigen Oberfläche dieser klebrigen Teilchen in einer nicht-ununterbrochenen Schicht haftend,

β) 20 bis 3 Gew.-% kleinere Feststoffteilchen, die hart und nichtklebrig sind und wenigstens ein den Schmelzfluß modifizierendes Mittel enthalten, das aus der in Punkt (b) von Anspruch 1 definierten Gruppe ausgewählt ist, mit der Maßgabe, daß das den Schmelzfluß modifizierende Mittel eine Einfriertemperatur von wenigstens 20°C hat.

6. Die Pulvermasse nach Anspruch 5, worin die klebrigen Pulverteilchen zusätzlich als Haftmittel weniger als 8 Gew.-% substituiertes Silan, des entsprechenden Silanols, siloxan oder eines Gemisches beliebiger dieser Verbindungen und als Stabilisator weniger als 10 Gew.-% Stabilisator gegen Oxidation, Stabilisator gegen UV-Licht oder eines Gemisches beliebiger dieser Stabilisatoren enthalten.

7. Verfahren zur Herstellung der Pulvermasse nach Anspruch 5 oder 6, worin man

I) ein Gemisch der in Anspruch 5 definierten Bestandteile (a) und (b) als Schmelze mischt,
II) das in der Schmelze gemischte Gemisch zur Bildung eines Feststoffs kühlt,
III) den hierbei erhaltenen Feststoff granuliert,
IV) die erhaltene granulierte Masse mit einem in Anspruch 5 definierten harten, nichtklebrigen Feststoff trocken mischt und
V) das hierbei erhaltene trockene Gemisch bei einer Temperatur unterhalb der Versprödungstemperatur des B-Blockteils des thermoplastischen Elastomeren unter Bildung von harten, nichtklebrigen Pulverteilchen zerkleinert, die an der Oberfläche der Teilchen der granulierten Masse haften, unter Bildung von Verbundteilchen, die nichtklebrig sind und nicht miteinander verschmelzen.

8. Verfahren zum Beschichten eines Glasbehälters, um das Zerstreuen von Glasbruchstücken beim Bruch des Behälters zu verhindern oder zu verringern, wobei das genannte Verfahren umfaßt

A) das Vorherhitzen des Glasbehälters,
B) das Aufbringen der Pulvermasse nach irgendeinem der Ansprüche 1 bis 4, 5 oder 6 oder der nach dem Verfahren des Anspruchs 7 hergestellten Pulvermasse auf die Außenwandfläche des Behälters,
C) Hitzebehandlung des Behälters, bis die Pulvermasse geschmolzen wird und einen glatten, geschmolzenen Überzug auf der Glasoberfläche bildet,
D) Aufbringen auf den in dieser Weise beschichteten Behälter eines aus Epoxyharz, Polyurethan, Polycarbonat, Polyester, Polystyrol, Ethylen/Vinylacetat-Copolymerisat und Acrylhomopolymerisat und -copolymerisat ausgewählten synthetischen Harzes in einer solchen Weise, daß das synthetische Harz auf im wesentlichen die gesamte Oberfläche des ersten Überzuges und auch auf einen Teil der Glasbehälteroberfläche aufgebracht wird,
E) Hitzebehandlung des in dieser Weise beschichteten Behälters, bis das synthetische Harz einen glatten Überzug bildet, und
F) Kühlen des so beschichteten Behälters auf im wesentlichen Umgebungstemperatur.

9. Nach dem Verfahren gemäß Anspruch 8 erhaltener beschichteter Glasbehälter.